# FASCICULE DE BREVET EUROPEEN

(11) **EP 2 313 844 B1**
(45) Date de publication et mention de la délivrance du brevet: **28.09.2016**
(21) Numéro de dépôt: 09737060.5
(22) Date de dépôt: 15.07.2009
(51) Int. Cl.: G06F 21/86, G06F 21/83, G06K 7/00, G06Q 20/34, G07F 7/08, G07F 7/10, H05K 5/02

(54) **DISPOSITIF ET PROCEDE DE PROTECTION D'UN SYSTEME ELECTRONIQUE CONTRE UN ACCES NON AUTORISE**
EINRICHTUNG UND VERFAHREN ZUM SCHUTZ EINES ELEKTRONISCHEN SYSTEMS VOR UNBEFUGTEM ZUGANG
DEVICE AND METHOD FOR PROTECTING AN ELECTRONIC SYSTEM AGAINST UNAUTHORIZED ACCESS

(30) Priorité: 17.07.2008 FR 0854862
(43) Date de publication de la demande: 27.04.2011
(73) Titulaire: Ingenico Group, 75015 Paris (FR)
(72) Inventeur: LACROIX, Pierre, F-07130 Saint Peray (FR)
(74) Mandataire: Thibon, Laurent
(86) Numéro de dépôt international: PCT/FR2009/051404
(87) Numéro de publication internationale: WO 2010/007314

(56) Documents cités:
- EP-A- 1 542 180
- WO-A-2008/140775
- US-A1- 2006 225 142
- US-A1- 2008 074 398
- US-B1- 6 983 378
- HALIT EREN ET AL: "Fringe-Effect Capacitive Proximity Sensors for Tamper Proof Enclosures" SENSORS FOR INDUSTRY CONFERENCE, 2005, IEEE, PI, 1 février 2005 (2005-02-01), pages 22-26, XP031027733 ISBN: 978-1-4244-0298-4
- RAM KRISHNA GARG: "CapSense? Express Software Tool" INTERNET ARTICLE, [Online] 18 mars 2008 (2008-03-18), pages 1-13, XP002514372 Online Extrait de l'Internet: URL:http://download.cypress.com.edgesuite. net/design_resources/application_notes/con tents/capsense_tm__express_software_tool__ _an42137_12.pdf> [extrait le 2009-02-10] cité dans la demande

## Description

### Domaine de l'invention

La présente invention concerne un dispositif et un procédé de protection d'un système électronique contre un accès non autorisé.

### Exposé de l'art antérieur

Certains systèmes électroniques, par exemple les terminaux de paiement électronique, comprennent un circuit imprimé contenu dans un boîtier. Des composants électroniques peuvent être soudés sur les deux faces du circuit imprimé ou être électriquement reliés au circuit imprimé. Il s'agit, par exemple, de microprocesseurs, d'un connecteur de carte à mémoire, d'un écran d'affichage, etc.

Les règles de sécurité édictées par les organismes d'agrément imposent généralement de prévoir des dispositifs de protection permettant d'empêcher l'accès à certains composants électroniques fixés au circuit imprimé, par exemple les microprocesseurs.

Un premier exemple de dispositif de protection adapté à un terminal de paiement électronique correspond à des touches factices prévues au niveau d'une membrane formant le clavier du terminal. Une touche factice est reliée au reste de la membrane par une lèvre périphérique, comme pour une touche classique, mais n'est pas visible depuis l'extérieur du terminal.

Lorsque le boîtier du terminal est refermé, la touche factice est sollicitée en permanence par le boîtier de façon à venir en appui contre le circuit imprimé. Dans ce cas, la touche factice ferme un interrupteur prévu au niveau du circuit intégré. La fermeture de l'interrupteur est détectée par un circuit de traitement non représenté. Lorsqu'un individu tente d'ouvrir le boîtier pour accéder à son contenu, la touche factice n'est plus sollicitée par le boîtier et est ramenée par l'action de la lèvre vers une position de repos entraînant l'ouverture de l'interrupteur associé. Le circuit de traitement est adapté à détecter cette ouverture, indiquant qu'une ouverture non autorisée du boîtier a lieu.

Un autre exemple de dispositif de protection adapté à un terminal de paiement électronique correspond à un dispositif à treillis. Un tel dispositif de protection correspond, par exemple, à un circuit souple comportant un empilement de films souples et isolants contenant une ou plusieurs pistes conductrices, par exemple en cuivre. Les pistes forment des lignes de sécurité disposées en zig-zag et reliées à un circuit de traitement. Le circuit de traitement est adapté à déterminer si une ligne de sécurité a été interrompue, l'interruption d'une ligne de sécurité correspondant à un accès non autorisé au circuit imprimé.

Chacun des exemples de dispositifs de protection décrits précédemment présente des inconvénients. En effet, dans le cas des dispositifs de protection à touches factices, un utilisateur pourrait, sans ouvrir le boîtier et en éliminant, par exemple par grattage, découpage, usinage, meulage, etc., une partie de la membrane clavier, accéder aux pistes métalliques du circuit imprimé et donc à des informations contenues dans le circuit imprimé sans qu'un accès non autorisé soit détecté. Un autre inconvénient d'un dispositif de protection à touches factices est qu'un accès non autorisé peut être détecté de façon erronée lors d'un déplacement d'une touche factice dans le cas où le boîtier du système électronique est soumis à un choc. En outre, pour un dispositif de protection à treillis, un utilisateur pourrait parvenir à déplacer, au moins en partie, le circuit souple du dispositif à treillis sans interrompre les pistes conductrices qu'il contient et ainsi accéder aux pistes métalliques du circuit imprimé sans qu'un accès non autorisé soit détecté.

Le document XP-310027733 divulgue un système de protection d'un circuit imprimé utilisant un capteur capacitif et un système de détection de variations de la capacité d'une piste conductrice.

Le document US-6983378-B1 divulgue un système de détection d'intrusion dans un boîtier contenant des informations sensibles dans lequel suite à une variation de capacité d'une piste conductrice les informations sensibles sont supprimées.

### Résumé de l'invention

La présente invention vise un dispositif de protection d'un système électronique contre les accès non autorisés à un circuit électronique contenu dans le boîtier du système électronique qui soit difficile à neutraliser.

Un autre objet de la présente invention vise un dispositif de protection peu sensible aux chocs.

Un objet d'un mode de réalisation de la présente invention est de proposer un système de protection configurable par produit ou famille de produits.

Dans ce but, un aspect de la présente invention prévoit un système électronique comportant un circuit imprimé contenu dans un boîtier. Le système comprend un dispositif de protection comprenant :
des pistes conductrices portées par le circuit imprimé et ayant chacune une extrémité libre et s'étendant au niveau du circuit imprimé ;
un premier circuit intégré connecté aux pistes conductrices et adapté à détecter une variation de la capacité vue par chaque piste conductrice ; et
un second circuit intégré, éventuellement confondu avec le premier circuit intégré, comprenant une mémoire configurable pour sélectionner certaines des pistes conductrices. Le second circuit intégré est adapté à déterminer qu'un accès autorisé ou non autorisé a lieu à partir de la détection de la variation de la capacité vue par au moins l'une des pistes conductrices sélectionnées.

Selon un mode de réalisation de l'invention, la configuration de la mémoire est différente d'un système à un autre ou d'une famille de systèmes à une autre.

Selon un mode de réalisation de l'invention, le tracé desdites pistes conductrices est hors de l'aplomb des composants portés par le circuit imprimé.

Selon un mode de réalisation de l'invention, le circuit imprimé est rigide, le système électronique comprenant un composant électronique relié au circuit imprimé par un circuit imprimé souple, au moins l'une desdites pistes conductrices s'étendant au niveau du circuit imprimé souple.

Selon un mode de réalisation de l'invention, lesdites pistes conductrices sont isolées électriquement les unes des autres et au moins deux desdites pistes conductrices se chevauchent et/ou sont adjacentes au niveau d'une partie du circuit imprimé.

Selon un mode de réalisation de l'invention, le premier circuit intégré est relié au second circuit intégré par une liaison série.

Un autre aspect de la présente invention prévoit un procédé de détermination d'un accès non autorisé à un circuit imprimé contenu dans un boîtier d'un système électronique. Le procédé comprend les étapes suivantes :
prévoir des pistes conductrices ayant chacune une extrémité libre et s'étendant au moins au niveau du circuit imprimé, un premier circuit intégré connecté aux pistes conductrices et un second circuit intégré, éventuellement confondu avec le premier circuit intégré, comprenant une mémoire ;
stocker dans la mémoire des paramètres de sélection de certaines des pistes conductrices ;
amener le premier circuit intégré à détecter, pour chaque piste conductrice, si la capacité vue par la piste conductrice varie ; et
amener le second circuit intégré à déterminer qu'un accès autorisé ou non autorisé a lieu à partir de la détection de la variation de la capacité vue par au moins l'une des pistes conductrices sélectionnées.

Selon un mode de réalisation de l'invention, à chaque piste conductrice correspond un identifiant. Le procédé consiste à amener le premier circuit intégré à transmettre au second circuit intégré l'identifiant de la piste conductrice pour laquelle la variation de la capacité est détectée.

Selon un mode de réalisation de l'invention, les paramètres comprennent au moins une liste d'identifiants d'au moins certaines pistes conductrices. Le second circuit intégré détermine qu'un accès autorisé ou non autorisé a lieu si l'identifiant de la piste pour laquelle la variation de la capacité est détectée appartient à la liste.

Selon un mode de réalisation de l'invention, les paramètres comprennent au moins une opération logique mettant en oeuvre les identifiants d'au moins certaines des pistes conductrices. Le second circuit intégré détermine qu'un accès autorisé ou non autorisé a lieu si des variations de capacité sont détectées pour les pistes conductrices associées auxdits identifiants et si l'opération logique est vérifiée.

Selon un mode de réalisation de l'invention, plusieurs jeux de paramètres sont stockés dans la mémoire. Le procédé consiste à fournir au second circuit intégré un signal de sélection d'un jeu de paramètres parmi lesdits jeux de paramètres, ledit jeu de paramètres sélectionné étant utilisé par le second circuit intégré pour déterminer qu'un accès autorisé ou non autorisé a lieu.

Selon un mode de réalisation de l'invention, la sélection des pistes conductrices diffère selon le système ou selon la famille de systèmes.

Selon un mode de réalisation de l'invention, le procédé, comprend, en outre, les étapes suivantes :
déterminer des valeurs d'étalonnage à partir d'un circuit imprimé de référence ;
réaliser une opération d'étalonnage du premier circuit intégré du circuit imprimé à partir desdites valeurs d'étalonnage ; et
amener le premier circuit intégré à émettre un signal d'anomalie dans le cas où il détecte une variation de la capacité vue par au moins l'une des pistes conductrices.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente, de façon schématique, un terminal de paiement électronique ;
la figure 2 est une vue de dessus schématique d'un circuit imprimé du terminal de la figure 1 comprenant un dispositif de protection selon un exemple de réalisation de l'invention ;
les figures 3 et 4 sont des sections partielles et schématiques du circuit imprimé de la figure 2 ; et
les figures 5 et 6 illustrent, sous la forme de schémas par blocs, des étapes d'exemples de procédés d'utilisation du dispositif de protection de la figure 2.

### Description détaillée

Par souci de clarté, de mêmes éléments ont été désignés par de mêmes références aux différentes figures. En outre, seuls les éléments nécessaires à la compréhension de l'invention seront décrits.

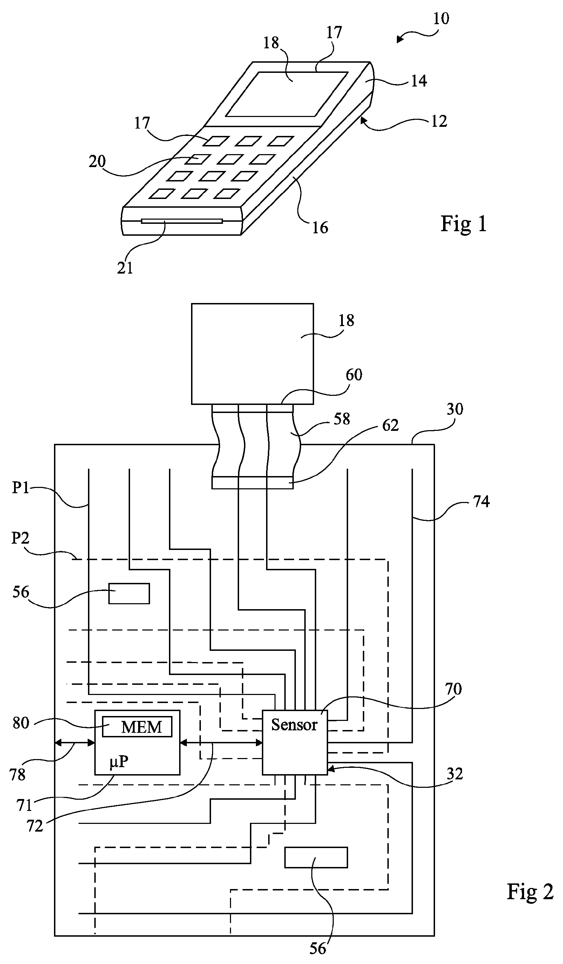

La figure 1 représente, de façon schématique, un exemple de réalisation d'un système électronique 10, par exemple un terminal de paiement électronique. Le terminal 10 comprend un boîtier 12 constitué d'une portion supérieure de boîtier 14 reliée à une portion inférieure de boîtier 16. Des ouvertures 17 sont prévues dans la portion supérieure de boîtier 14 pour un écran d'affichage 18 et des touches 20 appartenant, par exemple, à un clavier. En outre, une ouverture 21 est prévue dans le boîtier 12 pour permettre l'introduction de cartes à mémoire, par exemple des cartes bancaires, non représentées.

La figure 2 est une vue de dessus schématique d'un exemple de réalisation d'un circuit imprimé 30 contenu dans le boîtier 12 et muni d'un dispositif de protection 32 selon un exemple de réalisation de l'invention.

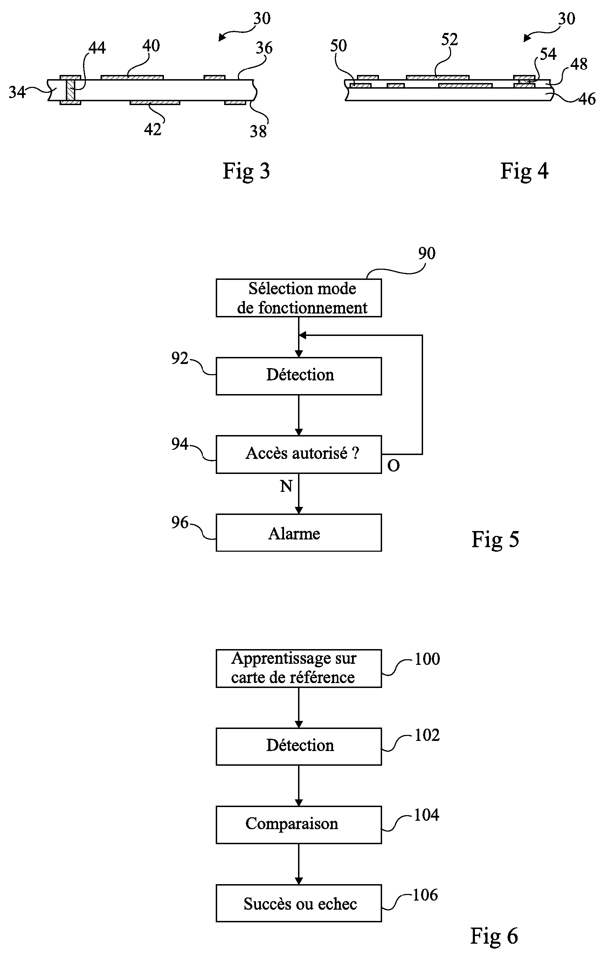

Les figures 3 et 4 représentent des sections transversales schématiques du circuit imprimé 30 de la figure 2 selon deux exemples de réalisation du circuit imprimé 30.

Dans l'exemple de réalisation représenté en figure 3, le circuit imprimé 30 est constitué d'un support 34 rigide et isolant comprenant deux faces opposées 36 et 38. Des pistes conductrices 40, par exemple en cuivre, sont disposées sur la face 36 et des pistes conductrices 42, par exemple en cuivre, sont disposées sur la face 38. Une couche d'un vernis de protection peut être prévue sur chaque face 36, 38. Des vias 44 traversant le support 34 relient certaines pistes 40 à des pistes 42.

Dans l'exemple de réalisation représenté en figure 4, le substrat 30 correspond à une structure multicouche comprenant une couche de base rigide et isolante 46 recouverte d'une couche isolante secondaire 48. Des pistes conductrices 50, par exemple en cuivre, sont prévues sur la couche de base 46 et sont recouvertes par la couche secondaire 48. Des pistes conductrices 52 sont disposées sur la couche isolante secondaire 48. Des vias 54 traversant la couche secondaire 48 relient certaines pistes conductrices 52 à des pistes 50.

En figure 2, on a représenté de façon schématique par des rectangles des composants 56 fixés au circuit imprimé 30. En outre, l'écran 18 peut être fixé au circuit imprimé 30 par l'intermédiaire d'un circuit imprimé souple 58, ou circuit flex, dont les extrémités sont connectées à l'écran 18 et au circuit imprimé 30 par l'intermédiaire de connecteurs 60, 62. Les pistes conductrices du circuit imprimé 30 participant au fonctionnement classique du terminal 10 ne sont pas représentées.

Le dispositif de protection 32 comprend un capteur de position capacitif 70 (Sensor) relié à un circuit de protection contre un accès non autorisé 71 (µP) par une liaison 72, par exemple une liaison série. Le capteur 70 correspond, par exemple, à un circuit intégré de la famille CY8C20x34 commercialisé sous l'appellation CapSense par la société Cypress Semiconductor Corporation.

Le capteur 70 est connecté à des pistes conductrices 74 portées par le circuit imprimé 30 et préférentiellement réparties sur celui-ci en fonction des zones à protéger. Les pistes 74 sont isolées les unes des autres et chaque piste 74 comprend une extrémité libre. De préférence, les pistes 74 s'étendent sensiblement sur la totalité du circuit imprimé 30, hors de l'aplomb des composants. En particulier, certaines pistes conductrices 74 peuvent s'étendre au niveau du circuit souple 58. On a représenté en figure 2 en traits pleins et en traits pointillés des pistes conductrices 74 de deux niveaux différents. A titre d'exemple, lorsque le circuit imprimé 30 est réalisé selon l'exemple de réalisation représenté en figure 3, les pistes conductrices 74 en trait plein correspondent à des pistes 40 et les pistes conductrices 74 en trait pointillé correspondent à des pistes 42. Lorsque le circuit imprimé 30 est réalisé selon l'exemple de réalisation représenté en figure 4, les pistes conductrices 74 en trait plein correspondent à des pistes 52 et les pistes conductrices 74 en trait pointillé correspondent à des pistes conductrices 50. Un plan de masse peut être prévu au niveau du circuit imprimé 30 entourant chaque piste conductrice 74 ou certaines d'entre elles et connecté au capteur 70.

Lorsqu'un via 44 ou 54 relie deux pistes dans des niveaux différents, au moins l'une d'elles a une extrémité libre. On peut donc considérer qu'il s'agit d'une même piste réalisée dans plusieurs niveaux et ayant une extrémité libre.

Des données peuvent être échangées entre le circuit de protection 71 et un système externe au terminal 10 par l'intermédiaire d'une liaison 78, par exemple une liaison série ou parallèle. Des données peuvent être échangées entre le capteur 70 et un système externe au terminal 10 par l'intermédiaire des liaisons 72, 78, et du circuit 71.

A titre d'exemple, le capteur 70 est adapté à détecter, pour chaque piste conductrice 74, qu'une variation de la capacité vue par la piste conductrice 74 a lieu et à fournir, dans ce cas, au circuit de protection 71, par la liaison 72, un signal d'anomalie représentatif d'un identifiant de la piste conductrice 74 pour laquelle une variation de capacité est détectée. Le capteur 70 peut vérifier de façon successive, piste 74 après piste 74, si la capacité vue par chaque piste 74 n'a pas varié. A titre d'exemple, le capteur 70 fournit un signal d'anomalie associé à une piste 74 donnée lorsque la différence (en valeur absolue) entre la capacité vue par la piste conductrice 74 et une valeur de référence est supérieure à un seuil. Une description plus détaillée d'un exemple de fonctionnement du capteur 70 est décrite dans les notices d'explication AN 2393 et AN 14459 fournies par la société Cypress Semiconductor Corporation.

Lorsqu'un individu tente d'accéder au circuit imprimé 30, par exemple au moyen d'outils, la présence de l'outil à proximité du circuit imprimé 30 entraîne une variation de la capacité vue par au moins l'une des pistes conductrices 74 adjacentes à l'outil, ce qui sera détecté par le capteur 70. La variation de capacité peut être obtenue sans que l'outil ne soit au contact du circuit imprimé 30. La détection de la variation de capacité des pistes 74 permet donc de détecter qu'un accès dans le boîtier 12 a lieu.

Une opération d'étalonnage du capteur 70 peut être réalisée pour fixer, pour chaque piste conductrice 74, la valeur de référence de capacité et le seuil de comparaison. Une description plus détaillée d'un exemple d'opération d'étalonnage du capteur 70 est décrite dans la notice d'explication AN 42137 fournie par la société Cypress Semiconductor Corporation. L'opération d'étalonnage peut être réalisée en connectant un système externe au capteur 70 par l'intermédiaire des liaisons 72, 78 et du circuit 71.

Le circuit de protection 71 est adapté à déterminer si un accès non autorisé à l'intérieur du boîtier 12 a lieu à partir des signaux d'anomalie fournis par le capteur 70. Lorsque le circuit 71 détermine qu'un accès non autorisé a lieu, il peut commander l'arrêt du terminal de paiement 10, l'effacement de données sensibles stockées dans le terminal de paiement 10, etc.

Dans le présent exemple de réalisation, le circuit de détection 71 comprend une mémoire 80 (MEM) dans laquelle sont stockés plusieurs jeux de conditions ou de paramètres. Chaque jeu de conditions correspond à un ensemble de conditions à partir desquelles le circuit 71 détermine si un accès autorisé ou non autorisé a lieu lorsqu'il reçoit un ou plusieurs signaux d'anomalie fournis par le capteur 70. A un instant donné, le circuit de protection 71 n'utilise que l'un des jeux de conditions. Les jeux de conditions peuvent être modifiés par un système externe connecté au terminal de paiement 10 par l'intermédiaire de la liaison 78. A titre d'exemple, un jeu de conditions peut comprendre une liste des identifiants des pistes conductrices 74 qui doivent être pris en compte pour la détection d'un accès non autorisé. Dans ce cas, le circuit 71 ne détermine qu'un accès non autorisé a lieu que s'il reçoit un signal d'anomalie correspondant à un identifiant appartenant à la liste. Selon un autre exemple, une condition peut correspondre à une opération logique reliant des identifiants de pistes 74. Lorsque le circuit de protection 71 reçoit successivement des signaux d'anomalie associés à différentes pistes 74, il détermine qu'un accès non autorisé a lieu seulement si l'opération logique reliant les identifiants de ces pistes est vérifiée.

L'utilisation de jeux de conditions permet de délimiter, de façon simple et modulable, des zones du circuit imprimé 30, dont on souhaite empêcher l'accès, de zones pour lesquelles on souhaite autoriser l'accès même si les pistes conductrices 74 s'étendent sur la quasi-totalité du circuit imprimé 30. La délimitation d'une zone du circuit imprimé 30 dont on souhaite autoriser l'accès peut être obtenue par une condition qui indique au circuit 71 de ne pas détecter un accès non autorisé dans le cas où le capteur 70 transmet successivement des signaux d'anomalie correspondant à un ensemble déterminé de pistes 74. A titre d'exemple, dans le cas où le jeu de conditions indique qu'un accès non autorisé doit être déterminé sauf dans le cas où le capteur 70 transmet des signaux d'anomalie correspondant aux pistes P1 et P2, ceci signifie que l'accès n'est pas autorisé pour l'ensemble des parties du circuit imprimé 30 au niveau desquelles s'étendent les pistes conductrices 74 à l'exception de la partie du circuit imprimé 30 au voisinage du croisement entre les pistes P1 et P2. La même partition peut être obtenue en prévoyant deux pistes conductrices 74 suffisamment proches l'une de l'autre dans la partie du circuit imprimé 30 pour laquelle on souhaite autoriser l'accès. Les pistes conductrices 74 peuvent alors être du même "niveau".

Une partition donnée du circuit imprimé 30 en zones à accès autorisé et zones à accès non autorisé correspond à un jeu de conditions donné. Plusieurs jeux de conditions, correspondant chacun à une partition particulière, peuvent être stockés dans la mémoire 80 du circuit de protection 71. Le capteur 70 utilise à un instant donné un seul jeu de conditions. La partition du circuit imprimé 30 peut être modifiée par la sélection du jeu de conditions utilisé par le circuit 71.

Une partition du circuit imprimé 30 en zones à accès autorisé et en zones à accès non autorisé peut être souhaitable dans certains cas. Selon un exemple, en fonctionnement, il peut être souhaitable d'autoriser un accès à certaines parties du circuit imprimé 30 à un utilisateur du terminal 10. A titre d'exemple, un terminal 10 peut comprendre une carte à puce du type carte SIM (de l'anglais Subscriber Identity Module) propre à l'utilisateur. Il peut alors être souhaitable d'autoriser le changement de la carte SIM par l'utilisateur. La présente invention permet, de façon avantageuse, d'adapter le nombre et la position des zones à accès autorisé du terminal 10 en fonction de la configuration de fonctionnement du terminal 10. Ainsi, lorsque le terminal 10 comprend une carte SIM, le circuit 71 utilise un jeu de conditions autorisant un accès à la carte SIM tandis que lorsque le terminal 10 ne comprend pas de carte SIM, le circuit 71 utilise un jeu de conditions n'autorisant pas un accès à l'emplacement du circuit imprimé 30 auquel, dans la configuration décrite précédemment, une carte SIM est présente. Selon un autre exemple, lors d'une opération de maintenance, il est souhaitable de permettre à un opérateur qualifié d'accéder à la totalité ou au moins à certaines parties du circuit imprimé 30.

La figure 5 représente, sous la forme d'un schéma par blocs, les étapes d'un procédé d'utilisation du circuit imprimé 30 de la figure 2 selon un exemple de réalisation de l'invention.

A l'étape 90, la sélection du mode de fonctionnement du circuit de protection 71 est réalisée. Ceci correspond à la sélection du jeu de conditions stocké dans la mémoire 80 à utiliser par le circuit 71. Ceci peut être obtenu par la connexion d'un système externe au terminal 10 par l'intermédiaire de la liaison 78. Ceci peut également être obtenu par l'entrée d'un code particulier par l'intermédiaire du clavier 20. Le procédé se poursuit à l'étape 92.

A l'étape 92, au cours du fonctionnement du terminal 10, le capteur 70 vérifie successivement si la capacité vue par chaque piste conductrice 74 varie. Lorsqu'une telle variation est détectée, le capteur 70 fournit au circuit de protection 71 un signal d'anomalie représentatif de l'identifiant de la piste conductrice 74 pour laquelle une détection a été réalisée. Un accès au circuit 30 peut entraîner l'émission successive de plusieurs signaux d'anomalie par le capteur 70 associés à différentes pistes conductrices 74. Le procédé se poursuit à l'étape 94.

A l'étape 94, le circuit 71 détermine si l'accès est autorisé ou non à partir du jeu de conditions sélectionné et à partir des identifiants des pistes conductrices 74 pour chacune desquelles il a reçu un signal d'anomalie. Si l'accès est autorisé, aucune action n'est réalisée et le procédé se poursuit à l'état 92. Si l'accès n'est pas autorisé, le procédé se poursuit à l'étape 96.

A l'étape 96, le circuit 71 réalise les étapes de protection du circuit imprimé 30 lors de la détection d'un accès non autorisé. Il s'agit, par exemple, de l'arrêt du fonctionnement du terminal 10, de l'effacement de certaines données stockées dans des mémoires connectées au circuit imprimé 30, etc.

La figure 6 représente, sous la forme d'un schéma par blocs, les étapes d'un procédé d'utilisation du circuit imprimé 30 selon un autre exemple de réalisation de l'invention. Un tel procédé consiste à utiliser le dispositif de protection 32 à la fin du montage de composants électroniques sur le circuit imprimé 30 pour s'assurer que tous les composants électroniques ont été disposés correctement. Il permet de façon simple, sans équipement dédié, de vérifier que le montage du circuit imprimé s'est déroulé correctement.

Le procédé débute à l'étape 100 à laquelle est réalisée une étape d'apprentissage qui consiste, pour un circuit imprimé 30 de référence pour lequel tous les composants 56 ont été mis en place correctement, à réaliser une opération d'étalonnage du capteur 70 du circuit imprimé 30 de référence jusqu'à ce qu'aucun signal d'anomalie ne soit transmis. On stocke les valeurs des paramètres d'étalonnage obtenus à la fin de l'étalonnage du circuit imprimé de référence. Le procédé se poursuit à l'étape 102.

A l'étape 102, lorsque tous les composants sont fixés à un circuit imprimé 30 à tester, une opération d'étalonnage du capteur 70 du circuit imprimé 30 à tester est réalisée à partir des paramètres d'étalonnage obtenus à l'étape 100. Le procédé se poursuit à l'étape 104.

A l'étape 104, lorsque certains composants ne sont pas disposés correctement sur le circuit imprimé 30 à tester et/ou lorsque certains composants prévus sont absents, les valeurs des capacités vues par les pistes conductrices 74 adjacentes aux emplacements des composants fixés de façon incorrecte et/ou manquants sont différentes des valeurs attendues. Cette différence est détectée par le capteur 70 qui fournit des signaux d'anomalie. Le procédé se poursuit à l'étape 106.

A l'étape 106, une analyse des signaux d'anomalie fournis par le capteur 70 est réalisée par l'intermédiaire d'un système externe relié au capteur 70 par les liaisons 72, 78 et le circuit 71. Cette analyse conduit à la détermination des composants manquants ou montés de façon incorrecte.

Le dispositif de protection est configurable, par les informations contenues dans la mémoire 80, pour distinguer des produits (ou systèmes) ou des familles de produits (ou familles de systèmes) les uns des autres. Ainsi, la configuration de la mémoire permet de sélectionner les pistes dont une variation de capacité est prise en compte. Sur la base d'une même structure, on peut donc modifier la signature du circuit par simple configuration de la mémoire 80. Cela rend encore plus difficile un éventuel piratage en supprimant la reproductibilité d'un circuit à un autre.

Le fait de ne pas prévoir de piste à l'aplomb des composants n'est pas gênant en terme de sécurité et évite d'introduire des capacités parasites dans le fonctionnement des circuits.

Des modes de réalisation particuliers de la présente invention ont été décrits. Diverses variantes et modifications apparaîtront à l'homme de l'art. En particulier, bien que dans les exemples de réalisation décrits précédemment, le circuit de protection 71 et le capteur 70 aient été décrits comme des circuits séparés, il est clair que ces deux circuits pourraient être, au moins en partie, communs. En particulier, le stockage et l'utilisation des jeux de conditions pourraient être réalisés par le capteur 70.

## Revendications

1. Système électronique (10) comportant un circuit imprimé (30) contenu dans un boîtier (12) et un dispositif de protection (32), **caractérisé en ce que** le système électronique comporte :
des pistes conductrices (74, P1, P2) portées par le circuit imprimé et ayant chacune une extrémité libre ;
un premier circuit intégré (70) connecté aux pistes conductrices et adapté à détecter une variation de la capacité vue par chaque piste conductrice ; et
un second circuit intégré (71), éventuellement confondu avec le premier circuit intégré, comprenant une mémoire (80) configurable pour sélectionner certaines des pistes conductrices, le second circuit intégré étant adapté à déterminer qu'un accès autorisé ou non autorisé a lieu à partir de la détection de la variation de la capacité vue par au moins l'une des pistes conductrices sélectionnées.

2. Système selon la revendication 1, dans lequel la configuration de la mémoire est différente d'un système à un autre ou d'une famille de systèmes à une autre.

3. Système selon la revendication 1 ou 2, dans lequel le tracé desdites pistes conductrices (74, P1, P2) est hors de l'aplomb de composants (56) portés par le circuit imprimé (30).

4. Système électronique selon l'une quelconque des revendications 1 à 3, dans lequel le circuit imprimé (30) est rigide, le système électronique (10) comprenant un composant électronique (18) relié au circuit imprimé par un circuit imprimé souple (58), au moins l'une desdites pistes conductrices (74) s'étendant au niveau du circuit imprimé souple.

5. Système électronique selon l'une quelconque des revendications 1 à 4, dans lequel lesdites pistes conductrices (74, P1, P2) sont isolées électriquement les unes des autres et dans lequel au moins deux desdites pistes conductrices se chevauchent et/ou sont adjacentes au niveau d'une partie du circuit imprimé (30).

6. Système électronique selon l'une quelconque des revendications 1 à 5, dans lequel le premier circuit intégré (71) est relié au second circuit intégré (70) par une liaison série (72).

7. Procédé de détermination d'un accès non autorisé à un circuit imprimé (30) contenu dans un boîtier (12) d'un système électronique (10), caractérisé en que le procédé comporte les étapes suivantes :
prévoir des pistes conductrices (74, P1, P2) ayant chacune une extrémité libre et s'étendant au moins au niveau du circuit imprimé, un premier circuit intégré (70) connecté aux pistes conductrices et un second circuit intégré (71), éventuellement confondu avec le premier circuit intégré, comprenant une mémoire (80) ;
stocker dans la mémoire des paramètres de sélection de certaines des pistes conductrices ;
amener le premier circuit intégré à détecter, pour chaque piste conductrice, si la capacité vue par la piste conductrice varie ; et
amener le second circuit intégré à déterminer qu'un accès autorisé ou non autorisé a lieu à partir de la détection de la variation de la capacité vue par au moins l'une des pistes conductrices sélectionnées.

8. Procédé selon la revendication 6, dans lequel à chaque piste conductrice (74, P1, P2) correspond un identifiant, le procédé consistant à amener le premier circuit intégré (71) à transmettre au second circuit intégré (72) l'identifiant de la piste conductrice pour laquelle la variation de la capacité est détectée.

9. Procédé selon la revendication 8, dans lequel les paramètres comprennent au moins une liste d'identifiants d'au moins certaines pistes conductrices (74, P1, P2), le second circuit intégré (71) déterminant qu'un accès autorisé ou non autorisé a lieu si l'identifiant de la piste pour laquelle la variation de la capacité est détectée appartient à la liste.

10. Procédé selon la revendication 8, dans lequel les paramètres comprennent au moins une opération logique mettant en oeuvre les identifiants d'au moins certaines des pistes conductrices (74, P1, P2), le second circuit intégré (71) déterminant qu'un accès autorisé ou non autorisé a lieu si des variations de capacité sont détectées pour les pistes conductrices associées auxdits identifiants et si l'opération logique est vérifiée.

11. Procédé selon l'une quelconque des revendications 7 à 10, dans lequel plusieurs jeux de paramètres sont stockés dans la mémoire (80), le procédé consistant à fournir au second circuit intégré (71) un signal de sélection d'un jeu de paramètres parmi lesdits jeux de paramètres, ledit jeu de paramètres sélectionné étant utilisé par le second circuit intégré pour déterminer qu'un accès autorisé ou non autorisé a lieu.

12. Procédé selon l'une quelconque des revendications 7 à 11, dans lequel la sélection des pistes conductrices diffère selon le système ou selon la famille de systèmes.

13. Procédé selon l'une quelconque des revendications 5 à 12, comprenant, en outre, les étapes suivantes :
déterminer des valeurs d'étalonnage à partir d'un circuit imprimé de référence ;
réaliser une opération d'étalonnage du premier circuit intégré (70) du circuit imprimé (30) à partir desdites valeurs d'étalonnage ; et
amener le premier circuit intégré à émettre un signal d'anomalie dans le cas où il détecte une variation de la capacité vue par au moins l'une des pistes conductrices (74, P1, P2).

## Patentansprüche

1. Ein Elektroniksystem (10), das eine gedruckte Schaltung (30), die in einer Einheit bzw. einem Gebinde (12) enthalten ist, und eine Schutzeinrichtung (32) aufweist, **dadurch gekennzeichnet, dass** das Elektroniksystem Folgendes aufweist:
Leiterbahnen (74, P1, P2), die von der gedruckten Schaltung getragen werden und jeweils ein freies Ende haben;
eine erste integrierte Schaltung (70), die mit den Leiterbahnen verbunden ist und in der Lage ist, eine Variation der Kapazität zu detektieren, die durch jede Leiterbahn erfahren wird; und
eine zweite integrierte Schaltung (71), die möglicherweise mit der ersten integrierten Schaltung gemeinsam ausgebildet ist, die einen Speicher (80) aufweist, der konfigurierbar ist zum Auswählen einiger der Leiterbahnen, wobei die zweite integrierte Schaltung in der Lage ist zu bestimmen, dass ein autorisierter oder nicht autorisierter Zugriff auftritt aus der Detektion der Variation der Kapazität, die durch wenigstens eine der ausgewählten Leiterbahnen erfahren wird.

2. System nach Anspruch 1, wobei sich die Speicherkonfiguration von einem System zu einem anderen oder von einer Familie von Systemen zu einer anderen unterscheidet.

3. System nach Anspruch 1 oder 2, wobei das Muster der Leiterbahnen (74, P1, P2) die Positionen über den Komponenten (56) vermeidet, die durch die gedruckte Schaltung (30) getragen werden.

4. Elektroniksystem nach einem der Ansprüche 1 bis 3, wobei die gedruckte Schaltung (30) starr ist, wobei das Elektroniksystem (10) eine Elektronikkomponente (18) aufweist, die mit der gedruckten Schaltung durch eine flexible, gedruckte Schaltung (58) verbunden ist, wobei sich wenigstens eine der Leiterbahnen (74) auf der Ebene der flexiblen, gedruckten Schaltung erstreckt.

5. Elektronikschaltung nach einem der Ansprüche 1 bis 4, wobei die Leiterbahnen (74, P1, P2) elektrisch voneinander isoliert sind und wenigstens zwei der Leiterbahnen sich überlappen und/oder angrenzend sind auf der Ebene eines Teils der gedruckten Schaltung (30).

6. Elektroniksystem nach einem der Ansprüche 1 bis 5, wobei die erste integrierte Schaltung (71) mit der zweiten integrierten Schaltung (70) durch eine Reihenverbindung (72) verbunden ist.

7. Ein Verfahren zum Bestimmen eines unautorisierten Zugriffs auf eine gedruckte Schaltung (30), die in einer Einheit bzw. einem Gebinde (12) eines Elektroniksystems (10) enthalten ist, **dadurch gekennzeichnet, dass** das Verfahren die folgenden Schritte aufweist:
Vorsehen von Leiterbahnen (74, P1, P2), von denen jede ein freies Ende hat und sich wenigstens auf der Ebene der gedruckten Schaltung erstreckt, einer ersten integrierten Schaltung (70), die mit den Leiterbahnen verbunden ist,
und einer zweiten integrierten Schaltung (71), die möglicherweise mit der ersten integrierten Schaltung gemeinsam ausgebildet ist, die einen Speicher (80) aufweist;
Speichern, in dem Speicher, von Parametern zum Auswählen einiger der Leiterbahnen;
Detektieren, durch die erste integrierte Schaltung, und zwar für jede Leiterbahn, ob die Kapazität, die durch die Leiterbahn erfahren wird, variiert; und
Bestimmen, durch die zweite integrierte Schaltung, dass ein autorisierter oder unautorisierter Zugriff auftritt, aus der Detektion der Variation der Kapazität, die durch wenigstens eine der ausgewählten Leiterbahnen erfahren wird.

8. Verfahren nach Anspruch 6, wobei jede Leiterbahn (74, P1, P2) einen entsprechenden Identifikator hat, wobei das Verfahren aufweist, dass die erste integrierte Schaltung (71) an die zweite integrierte Schaltung (72) den Identifikator der Leiterbahn sendet, für die die Kapazitätsvariation detektiert wird.

9. Verfahren nach Anspruch 8, wobei die Parameter wenigstens eine Liste von Identifikatoren wenigstens einiger Leiterbahnen (74, P1, P2) aufweisen, wobei die zweite integrierte Schaltung (71) bestimmt, dass ein autorisierter oder unautorisierter Zugriff auftritt, wenn der Identifikator der Bahn, für welche die Kapazitätsvariation detektiert wird, zu der Liste gehört.

10. Verfahren nach Anspruch 8, wobei die Parameter wenigstens eine Logikoperation aufweisen, die die Identifikatoren wenigstens einiger der Leiterbahnen (74, P1, P2) involviert, wobei die zweite integrierte Schaltung (71) bestimmt, dass ein autorisierter oder unautorisierter Zugriff auftritt, wenn Kapazitätsvariationen für die Leiterbahnen detektiert werden, die mit den Identifikatoren assoziiert sind und wenn die Logikoperation verifiziert wird.

11. Verfahren nach einem der Ansprüche 7 bis 10, wobei mehrere Sätze von Parametern in dem Speicher (80) gespeichert werden, wobei das Verfahren Beliefern der zweiten integrierten Schaltung (71) mit einem Signal zum Auswählen eines Satzes von Parametern aus dem Satz von Parametern aufweist, wobei der ausgewählte Satz von Parametern durch die zweite integrierte Schaltung verwendet wird zum Bestimmen, dass ein autorisierter oder unautorisierter Zugriff stattfindet.

12. Verfahren nach einem der Ansprüche 7 bis 11, wobei die Auswahl der Leiterbahnen sich gemäß dem System oder der Systemfamilie unterscheidet.

13. Verfahren nach einem der Ansprüche 5 bis 12, das weiter die folgenden Schritte aufweist:
Bestimmen von Kalibrierungswerten basierend auf einer gedruckten Referenzschaltung;
Kalibrieren der ersten integrierten Schaltung (70) der gedruckten Schaltung (30) basierend auf den Kalibrierungswerten; und
Senden, durch die erste integrierte Schaltung, eines Fehlersignals in dem Fall, in dem sie eine Variation der Kapazität detektiert, die durch wenigstens eine der Leiterbahnen (74, P1, P2) erfahren wird.

## Claims

1. An electronic system (10) comprising a printed circuit (30) contained in a package (12) and a protection device (32) **characterized in that** the electronic system comprises:
conductive tracks (74, P1, P2) supported by the printed circuit and each having a free end;
a first integrated circuit (70) connected to the conductive tracks and capable of detecting a variation of the capacitance seen by each conductive track; and
a second integrated circuit (71), possibly confounded with the first integrated circuit, comprising a memory (80) configurable to select some of the conductive tracks, the second integrated circuit being capable of determining that an authorized or unauthorized access is occurring from the detection of the variation of the capacitance seen by at least one of the selected conductive tracks.

2. The system of claim 1, wherein the memory configuration is different from one system to another or from one family of systems to another.

3. The system of claim 1 or 2, wherein the pattern of said conductive tracks (74, P1, P2) avoids the locations above the components (56) supported by the printed circuit (30).

4. The electronic system of any of claims 1 to 3, wherein the printed circuit (30) is rigid, the electronic system (10) comprising an electronic component (18) connected to the printed circuit by a flexible printed circuit (58), at least one of said conductive tracks (74) extending at the level of the flexible printed circuit.

5. The electronic circuit of any of claims 1 to 4, wherein said conductive tracks (74, P1, P2) are electrically isolated from one another and at least two of said conductive tracks overlap and/or are adjacent at the level of a portion of the printed circuit (30).

6. The electronic system of any of claims 1 to 5, wherein the first integrated circuit (71) is connected to the second integrated circuit (70) by a series connection (72).

7. A method for determining an unauthorized access to a printed circuit (30) contained in a package (12) of an electronic system (10), **characterized in that** the method comprises the steps of:
providing conductive tracks (74, P1, P2), each having a free end and extending at least at the printed circuit level, a first integrated circuit (70) connected to the conductive tracks, and a second integrated circuit (71), possibly confounded with the first integrated circuit, comprising a memory (80);
storing into the memory parameters for selecting some of the conductive tracks;
having the first integrated circuit detect, for each conductive track, whether the capacitance seen by the conductive track varies; and
having the second integrated circuit determine that an authorized or unauthorized access is occurring from the detection of the variation of the capacitance seen by at least one of the selected conductive tracks.

8. The method of claim 6, wherein each conductive track (74, P1, P2) has a corresponding identifier, the method comprising having the first integrated circuit (71) transmit to the second integrated circuit (72) the identifier of the conductive track for which the capacitance variation is detected.

9. The method of claim 8, wherein the parameters comprise at least a list of identifiers of at least some conductive tracks (74, P1, P2), the second integrated circuit (71) determining that an authorized or unauthorized access is occurring if the identifier of the track for which the capacitance variation is detected belongs to the list.

10. The method of claim 8, wherein the parameters comprise at least one logic operation involving the identifiers of at least some of the conductive tracks (74, P1, P2), the second integrated circuit (71) determining that an authorized or unauthorized access is occurring if capacitance variations are detected for the conductive tracks associated with said identifiers and if the logic operation is verified.

11. The method of any of claims 7 to 10, wherein several sets of parameters are stored in the memory (80), the method comprising providing the second integrated circuit (71) with a signal for selecting a set of parameters from among said sets of parameters, said selected set of parameters being used by the second integrated circuit to determine that an authorized or unauthorized access is occurring.

12. The method of any of claims 7 to 11, wherein the selection of the conductive tracks differs according to the system or to the family of systems.

13. The method of any of claims 5 to 12, further comprising the steps of:
determining calibration values based on a reference printed circuit;
calibrating the first integrated circuit (70) of the printed circuit (30) based on said calibration values; and
having the first integrated circuit transmit a fault signal in the case where it detects a variation of the capacitance seen by at least one of the conductive tracks (74, P1, P2).
